# EUROPÄISCHE PATENTSCHRIFT

(11) **EP 2 304 124 B1**
(45) Veröffentlichungstag und Bekanntmachung des Hinweises auf die Patenterteilung: **23.11.2011**
(21) Anmeldenummer: 08773908.2
(22) Anmeldetag: 08.07.2008
(51) Int. Cl.: E04D 3/365

(54) **DACHAUFBAU**
ROOF STRUCTURE
STRUCTURE DE TOIT

(30) Priorität: 09.06.2008 DE 202008007662 U
(43) Veröffentlichungstag der Anmeldung: 06.04.2011
(73) Patentinhaber: ARCELORMITTAL Construction Deutschland GmbH, 06796 Behna (DE)
(72) Erfinder: KÖHLER, Matthias, 06682 Teuchern (DE)
(74) Vertreter: Lasch, Hartmut
(86) Internationale Anmeldenummer: PCT/EP2008/005539
(87) Internationale Veröffentlichungsnummer: WO 2009/149736

(56) Entgegenhaltungen:
- DE-A1-102005 019 857

## Beschreibung

Die Erfindung betrifft einen Dachaufbau mit einer Dachhaut, die aus zumindest zwei Dachhautelementen aufgebaut ist, die nebeneinander angeordnet sind, sich in randseitigen Überlappungsabschnitten überlappen und mit zumindest einem Befestigungselement miteinander verbunden und befestigt sind, und mit einem Lagerteil, das eine Auflagerfläche für ein auf der Dachhaut anzubringendes Modul aufweist und an der Dachhaut befestigt ist.

Insbesondere bei Industriebauten wird die Dachhaut aus vorgefertigten Dachhautelementen oder Dachhauttafeln zusammengesetzt, bei denen es sich beispielsweise um Trapezprofiltafeln oder vorgefertigte Sandwichpaneele handeln kann. Die Dachhautelemente werden nebeneinander gelegt und miteinander verbunden. Dies geschieht dadurch, dass jedes Dachhautelement einen randseitigen Überlappungsabschnitt aufweist, wobei die Überlappungsabschnitte benachbarter, nebeneinander liegender Dachhautelemente übereinander gelegt werden und sich dabei üblicherweise in formschlüssiger Weise übergreifen. Dadurch ist eine korrekte Positionierung und Ausrichtung der beiden Dachhautelemente relativ zueinander gewährleistet. Die eigentliche Befestigung der Dachhautelemente geschieht durch Befestigungselemente, beispielsweise Schrauben, die im Bereich der Überlappungsabschnitte durch diese hindurchgetrieben und mit einer Unterkonstruktion in Eingriff gebracht werden. Somit sind die Dachhautelemente sowohl relativ zueinander fixiert als auch auf der Unterkonstruktion befestigt.

In vielen Fällen ist es gewünscht, auf der Oberseite der Dachhaut nachträglich vorgefertigte Module, beispielsweise Solarmodule zur Gewinnung von elektrischer Energie anzubringen. Dies ist insbesondere bei Industriebauten sinnvoll, da diese eine relativ große Dachfläche besitzen. Die Befestigung von Solarmodulen auf Dachflächen mit einer Dachhaut der genannten Bauart bedarf immer einer speziellen Unterkonstruktion, auf der die Solarmodule abgelegt werden. Zu diesem Zweck ist es bekannt, Haltebügel oder Auflagerleisten auf die Dachhautelemente aufzulegen und mit diesen zu verschrauben. Da die Dachhautelemente aus relativ dünnwandigen Profilen bestehen, ist die nachträgliche Anbringung der Haltebügel oder Auflagerleisten problematisch. Darüber hinaus sind an den Befestigungsstellen der Haltebügel oder Auflagerleisten mögliche Undichtigkeitsstellen gegeben, die zuverlässig abgedichtet werden müssen, um das spätere Eindringen von Wasser in den Dachaufbau oder das Gebäude zu verhindern. Desweiteren ist die Montage der Haltebügel oder Auflagerleisten arbeitsaufwendig und somit kostenintensiv.

DE 10 2005 019857 A1 zeigt einem Dachaufbau gemäß des Oberbegriffs des Anspruchs 1.

Der Erfindung liegt die Aufgabe zugrunde, einen Dachaufbau der genannten Art zu schaffen, bei dem die Anbringung von Modulen und insbesondere von Solarmodulen in konstruktiv einfacher Weise möglich ist.

Diese Aufgabe wird erfindungsgemäß mit einem Dachaufbau mit den Merkmalen des Anspruchs 1 gelöst. Dabei ist vorgesehen, dass das Lagerteil einen Eingriffsabschnitt aufweist, der auf einem der Überlappungsabschnitte der Dachhautelemente aufliegt, und dass das Befestigungselement die Überlappungsabschnitte und den Eingriffsabschnitt durchdringt.

Erfindungsgemäß wird von der Grundüberlegung ausgegangen, die Befestigung des Lagerteils, das die Auflagerfläche für das anzubringende Modul besitzt, in die Befestigung der Dachhautelemente zu integrieren. Bei dem erfindungsgemäßen Dachaufbau liegen die beiden Überlappungsabschnitte der Dachhautelemente und der Eingriffsabschnitt des Lagerteils im Befestigungsbereich aufeinander und werden von dem Befestigungselement, bei dem es sich vorzugsweise um eine übliche Befestigungsschraube handelt, gemeinsam durchdrungen. Mit der Befestigung der Dachhautelemente wird gleichzeitig auch das Lagerteil fixiert, ohne dass eine zusätzliche Durchdringung der Dachhaut notwendig ist. Auf diese Weise ist die Entstehung weiterer möglicher Undichtigkeiten oder Leckagestellen verhindert. Darüber hinaus lässt sich das Lagerteil in einfacher Weise und ohne zusätzlichen Montageschritten bei dem Aufbau des Daches montieren.

In Ausgestaltung der Erfindung ist vorgesehen, dass der Eingriffsabschnitt des Lagerteils zwischen den beiden Überlappungsabschnitten der Dachhautelemente angeordnet ist. Auf diese Weise ist eine besonders stabile Lagehrung und Fixierung des Lagerteils gegeben.

Die Überlappungsabschnitte der Dachhautelemente und der Eingriffsabschnitt können jeweils eben ausgebildet sein und nach Art eines Plattenstapels aufeinanderliegen. In bevorzugter Ausgestaltung der Erfindung ist vorgesehen, dass sowohl die Überlappungsabschnitte der Dachhautelemente als auch der Eingriffsabschnitt des Halteteils gleichartig räumlich strukturierte Querschnitte aufweisen. Eine mögliche Querschnittsform ist beispielsweise die Trapezform. Wenn die Überlappungsabschnitte der Dachhautelemente in Richtung der dem Gebäude abgewandten Oberseite der Dachhaut trapezförmig aufgewölbt sind, können sie sich in formschlüssiger Weise übergreifen. Auf diese Weise ist eine einfache korrekte Vorfixierung der Dachhautelemente möglich, da die Dachhautelemente bei sich übergreifenden trapezförmigen Überlappungsabschnitten die korrekte relative Position einnehmen. Auch der Eingriffsabschnitt des Lagerteils weist einen entsprechend geformten Querschnitt, beispielsweise einen Trapezquerschnitt auf, so dass die beiden Überlappungsabschnitte und der Eingriffsabschnitt unter enger Passung aufeinanderliegen und gleichzeitig formschlüssig in Eingriff stehen. Die endgültige Fixierung der Dachhautelemente und des Lagerteils erfolgt dann durch das Befestigungselement und insbesondere durch eine Vielzahl von Befestigungselementen bzw. Befestigungsschrauben.

Das Lagerteil hat die Aufgabe, dass auf ihm anzubringende Modul bzw. Solarmodul sicher zu halten und auch die dabei auftretenden Lasten infolge Eigengewicht, Schnee, Wind etc. sicher abzutragen. Aus statischen Gründen ist es vorteilhaft, wenn das Lagerteil mit einem Grundabschnitt möglichst vollflächig auf der Oberseite eines der Dachhautelemente aufliegt, so dass das Auftreten punktförmiger Belastungen und daraus resultierender Spannungsspitzen vermieden ist.

In einer möglichen Ausgestaltung kann vorgesehen sein, dass das Lagerteil einen C-förmigen Querschnitt besitzt. Der untere, horizontale C-Schenkel bildet den Grundabschnitt und liegt auf der Oberseite eines der Dachhautelements auf. Der obere C-Schenkel bildet einen oberen Quersteg, auf dessen Oberseite die Auflagerfläche für das anzubringende Modul gebildet ist. Der obere Quersteg steht über einen vertikalen Steg, der von dem vertikalen C-Schenkel gebildet ist, mit dem Grundabschnitt in Verbindung. An dem dem vertikalen Steg abgewandten Ende des Grundabschnittes ist der Eingriffsabschnitt des Lagerteils angeformt, der einen dem Querschnitt der Überlappungsabschnitte gleichartigen Querschnitt und insbesondere einen trapezförmigen Querschnitt besitzt.

Das anzubringende Modul bzw. Solarmodul kann auf eine Vielzahl von kurzen, bügelartigen Lagerteilen aufgelagert werden, wesentlich einfacher ist die Montage jedoch, wenn das Lagerteil leistenförmig und insbesondere über eine Länge von zumindest 2m bis 3m ausgebildet ist, wobei das leistenförmige Lagerteil sich entlang den Überlappungsabschnitten der Dachhautelemente erstreckt. Vorzugsweise ist die Dachhaut in jeder Stoßfuge benachbarter Dachhautelemente und vorzugsweise über die gesamte Länge einer entsprechenden Stoßfuge mit Lagerteilen versehen.

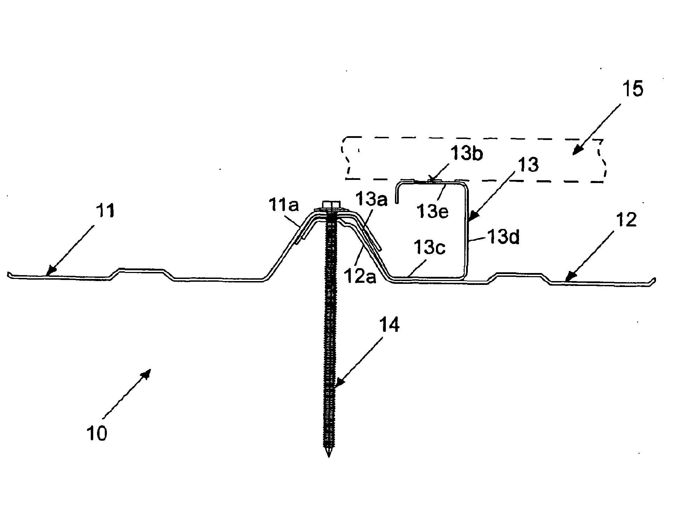

Weitere Einzelheiten und Merkmale der Erfindung sind aus der folgenden Beschreibung eines Ausführungsbeispiels unter Bezugnahme auf die Zeichnung ersichtlich, wobei die einzige Figur einen ausschnittsweisen Querschnitt durch einen erfindungsgemäßen Dachaufbau zeigt.

Gemäß der Figur umfasst ein Dachaufbau 10 ein 1. Dachhautelement 11 und ein 2. Dachhautelement 12, wobei beide Dachhautelemente 11 und 12 beispielhaft als Trapezblech dargestellt sind. Die beiden Dachhautelemente 11 und 12 sind nebeneinander liegend angeordnet und weisen an ihren aneinander zugewandten Seitenkanten jeweils einen Überlappungsabschnitt 11a bzw. 12a auf. Die beiden Überlappungsabschnitte 11a und 12a besitzen jeweils einen trapezförmigen Querschnitt und sind so ausgestattet, dass der Überlappungsabschnitt 11a des einen Dachhautelementes 11 den Überlappungsabschnitt 12a des anderen Dachhautelementes 12 formschlüssig unter enger Passung übergreift.

Auf die Oberseite des gemäß der Figur rechten Dachhautelementes 12 ist ein Lagerteil 13 aufgelegt, das einen im wesentlichen C-förmigen Querschnitt besitzt. Der obere horizontale C-Schenkel 13e bildet einen oberen Quersteg, auf dessen Oberseite eine Auflagerfläche 13 gebildet ist, auf die ein nur gestrichelt dargestelltes Modul, z.B. ein Solarmodul, aufgelegt und befestigt werden kann. Der obere Quersteg 13a geht an seinem einen Ende in einen vertikalen Steg 13d über, der bis zur Oberseite des Dachhautelementes 12 verläuft und dort in einen unteren Quersteg übergeht, der ein Grundteil 13c des Lagerteils 13 bildet, mit dem das Lagerteil 13 auf der Oberseite des Dachhautelementes 12 vollflächig aufliegt.

An der dem vertikalen Steg 13d abgewandten Ende des unteren Grundteils 13c ist ein Eingriffsabschnitt 13a angeformt, der einen trapezförmigen Querschnitt entsprechend den Oberlappungsabschnitten 11a und 12a der Dachhautelemente 11 und 12 besitzt.

Bei der Montage der Dachhaut 10 wird zunächst das Dachhautelement 12 auf eine nicht dargestellte Unterkonstruktion aufgelegt. Anschließend wird das Lagerteil 13, das sich vorzugsweise über die gesamte Länge des Dachhautelementes 12 senkrecht zur Zeichenebene erstreckt und somit leistenförmig ausgebildet ist, mit seinem Eingriffsabschnitt 13a auf den randseitigen Überlappungsabschnitt 12a des Dachhautelementes 12 aufgelegt, wobei der Eingriffsabschnitt 13a den Überlappungsabschnitt 12a unter enger Passung formschlüssig übergreift. Anschließend wird das andere Dachhautelement 11 mit seinem Überlappungsabschnitt 11a über den Eingriffsabschnitt 13a und den Überlappungsabschnitt 12a gelegt, so dass im Überlappungs- bzw. Eingriffsbereich die beiden Überlappungsabschnitte 11a und 12a unter Zwischenschaltung des Eingriffsabschnitts 13a des Lagerteils 13 unter enger Passung übereinander greifen. Zur Fixierung wird ein Befestigungselement 14 in Form einer Blechschraube von oben durch den dreilagigen Stoß getrieben, der aus den beiden Überlappungsabschnitten 11a und 12a und dem Eingriffsabschnitt 13a gebildet ist. Das Befestigungselement 14 verbindet die genannten Teile miteinander und zusätzlich mit einer nicht dargestellten Unterkonstruktion.

## Patentansprüche

1. Dachaufbau mit einer Dachhaut (10), die aus zumindest zwei Dachhautelementen (11, 12) aufgebaut ist, die nebeneinander angeordnet sind, sich in randseitigen Überlappungsabschnitten (11a, 12a) überlappen und mit zumindest einem Befestigungselement (14) miteinander verbunden und befestigt sind, und mit einem Lagerteil (13), das eine Auflagerfläche (13b) für ein auf der Dachhaut (10) anzubringendes Modul (15) aufweist und an der Dachhaut (10) befestigt ist, wobei das Lagerteil (13) einen Eingriffsabschnitt (13a) aufweist, der auf einem der Überlappungsabschnitte (11a, 12a) aufliegt, und wobei das Befestigungselement (14) die Überlappungsabschnitte (11a, 12a) und den Eingriffsabschnitt (13a) durchdringt, **dadurch gekennzeichnet, dass** der Eingriffsabschnitt (13a) zwischen den Überlappungsabschnitten (11a, 12a) der Dachhautelemente (11, 12) angeordnet ist.

2. Dachaufbau nach Anspruch 1, **dadurch gekennzeichnet, dass** die Überlappungsabschnitte (11a, 12a) und der Eingriffsabschnitt (13a) gleichartig räumlich strukturierte Querschnitte aufweisen und unter enger Passung aufeinanderliegen.

3. Dachaufbau nach Anspruch 2, **dadurch gekennzeichnet, dass** die Querschnitte trapezförmig sind.

4. Dachaufbau nach einem der Ansprüche 1 bis 3, **dadurch gekennzeichnet, dass** das Lagerteil (13) mit einem Grundabschnitt (13c) auf einem der Dachhautelemente (12) aufliegt.

5. Dachaufbau nach einem der Ansprüche 1 bis 4, **dadurch gekennzeichnet, dass** die Auflagerfläche (13b) auf der Oberseite eines oberen Querstegs (13e) des Lagerteils (13) gebildet ist.

6. Dachaufbau nach einem der Ansprüche 1 bis 5, **dadurch gekennzeichnet, dass** das Lagerteil (13) leistenförmig ausgebildet ist und sich entlang den Überlappungsbereichen (11a, 12a) der Dachhautelemente (11, 12) erstreckt.

## Claims

1. A roof structure with a roof skin (10) which is constructed from at least two roof skin elements (11, 12) which are arranged next to each other, overlap in overlapping sections on the edge side (11 a, 12a) and are connected and fastened to each other with at least one fastening element (14), and with a bearing section (13) which has a supporting surface (13b) for a module (15) to be mounted on the roof skin (10 and is secured to the roof skin (10), wherein the bearing section (13) has an engagement section (13a) which lies on one of the overlapping sections (11a, 12a), and wherein the fastening element (14) penetrates the overlapping sections (11a, 12a) and the engagement section (13a), **characterised in that** the engagement section (13a) is arranged between the overlapping sections (11a, 12a) of the roof skin elements (11, 12).

2. The roof structure according to Claim 1, **characterised in that** the overlapping sections (11a, 12a) and the engagement section (13a) have uniformly spatially structured cross-sections and lie upon each other with a close fit.

3. The roof structure according to Claim 2, **characterised in that** the cross-sections are trapezoidal.

4. The roof structure according to any one of Claims 1 to 3, **characterised in that** the bearing section (13) lies with a base section (13c) on one of the roof skin elements (12).

5. The roof structure according to any one of Claims 1 to 4, **characterised in that** the contact surface (13b) is formed on the upper side of an upper cross-member (13e) of the bearing section (13).

6. The roof structure according to any one of Claims 1 to 5, **characterised in that** the bearing section (13) is designed in the form of a strip and extends along the overlapping regions (11a, 12a) of the roof skin elements (11, 12).

## Revendications

1. Structure de toit avec un panneau de toit (10) réalisé à partir d'au moins deux éléments de panneau de toit (11, 12) disposés côte à côte, se chevauchant au niveau des sections de chevauchement (11 a, 12a) situées en bordure et fixés et reliés entre eux à l'aide d'au moins un élément de fixation (14) et avec une partie de palier (13) comportant une surface d'appui (13b) pour un module (15) pouvant être placé sur le panneau de toit (10) et étant fixée au niveau du panneau de toit (10), la partie de palier (13) comportant une section de préhension (13a) reposant sur une des sections de chevauchement (11a, 12a) et l'élément de fixation (14) traversant les sections de chevauchement (11a, 12a) et la section de préhension (13a), **caractérisée en ce que** la section de préhension (13a) est disposée entre les sections de chevauchement (11a, 12a) des éléments de panneau de toit (11, 12).

2. Structure de toit selon la revendication 1, **caractérisée en ce que** les sections de chevauchement (11 a, 12a) et la section de préhension (13a) présentent des sections transversales de même structure dans l'espace et s'adaptent l'une sur l'autre par ajustement serré.

3. Structure de toit selon la revendication 2, **caractérisée en ce que** les sections transversales sont en forme de trapèze.

4. Structure de toit selon l'une quelconque des revendications 1 à 3, **caractérisée en ce que** la partie de palier (13) repose, avec une section de base (13c), sur un des éléments de panneau de toit (12).

5. Structure de toit selon l'une quelconque des revendications 1 à 4, **caractérisée en ce que** la surface d'appui (13b) est formée sur le côté supérieur d'un étai transversal supérieur (13e) de la partie de palier (13).

6. Structure de toit selon l'une quelconque des revendications 1 à 5, **caractérisée en ce que** la partie de palier (13) prend une forme de baguette et s'étend le long des régions de chevauchement (11a, 12a) des éléments de panneau de toit (11, 12).
